# EUROPEAN PATENT SPECIFICATION

(11) **EP 2 713 051 B1**
(45) Date of publication and mention of the grant of the patent: **18.11.2015**
(21) Application number: 13186433.2
(22) Date of filing: 27.09.2013
(51) Int. Cl.: F04B 35/00, F04B 35/01, F01D 15/08, F01D 15/12, F01D 25/36, F02C 7/36

(54) **A turbine-driven reciprocating compressor and method of operating said compressor**
Turbinengetriebener reziprokierender Verdichter und Verfahren zum Betreiben des Verdichters
Compresseur réciproque entrainé par une turbine et une méthode pour opérer ce compresseur

(30) Priority: 01.10.2012 IT FI20120194
(43) Date of publication of application: 02.04.2014
(73) Proprietor: Nuovo Pignone S.p.A., 50127 Florence (IT)
(72) Inventor: Tognarelli, Leonardo Li, 50127 Firenze (IT); Pratelli, Guido, 50127 Firenze (IT); Milani, Giuliano, 50127 Firenze (IT); Failla, Lorenzo, 50127 Firenze (IT); Tammaro, Nicola, 50127 Firenze (IT); Sonnoli, Marco, 50127 Firenze (IT)
(74) Representative: Illingworth-Law, William Illingworth

(56) References cited:
- WO-A1-2012/059471
- CN-A- 102 383 866
- CN-U- 202 194 692
- US-A1- 2008 081 733
- US-A1- 2011 135 510

## Description

### FIELD OF THE INVENTION

Embodiments of the present disclosure generally relate to reciprocating compressor systems and more specifically to reciprocating compressor systems driven by turbines, such as steam turbines.

### DESCRIPTION OF THE RELATED ART

Reciprocating compressors are commonly used in the industry for compressing gases in a wide range of applications. Reciprocating compressors are usually driven by a prime mover, which can be an electric motor, a reciprocating internal combustion engine or a gas or steam turbine.

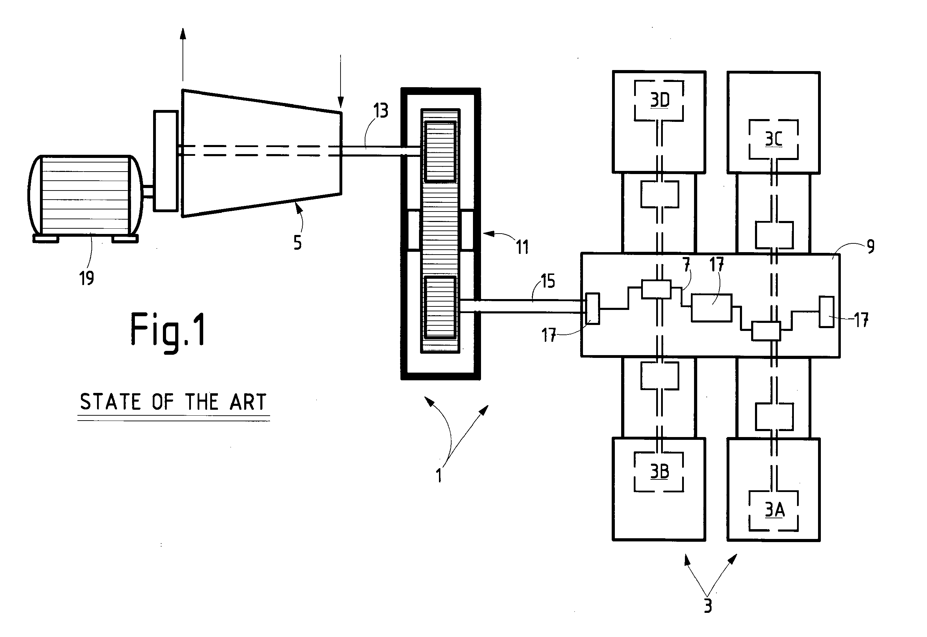

Fig. 1 illustrates a prior art arrangement 1 comprising a reciprocating compressor system, comprising a compressor 3, and a steam turbine 5 used to drive the reciprocating compressor 3. In Fig. 1 the reciprocating compressor 3 comprises a plurality of compressor cylinders 3A, 3B, 3C and 3D. A common crankshaft 7 drives the four reciprocating compressor cylinders 3A-3D and supports a flywheel (not shown). The crankshaft 7 is rotatingly supported in a casing 9 and is driven into rotation by the steam turbine 5 through a gearbox 11 having an inlet shaft 13 and an outlet shaft 15. The inlet shaft 13 (high speed coupling) rotates at the rotary speed of the steam turbine 5, while the output driven shaft 15 (low speed coupling), which connects the gearbox 11 to the crankshaft 7, rotates at a substantially lower rotational speed.

The crankshaft 7 is usually supported by hydrodynamic bearings 17. Correct operation of hydrodynamic bearings is dependent upon the speed between mutually moving parts, e.g. a fixed bushing and a rotary member, such as a pin or shaft. A lubrication oil film develops between the moving components when a sufficient speed is achieved. Lubrication of other components and parts of reciprocating compressor is also dependent upon the operation speed of the compressor, for instance lubrication of crossheads and runners, piston rods and the like.

Also the shafts in the gearbox 11 can be supported by hydrodynamic bearings and require to rotate at a speed sufficient to generate a lubrication oil film, to prevent bearing damages.

When the steam turbine 5 is shut down, the steam turbine 5 must be kept rotating at low turning speed in order to prevent bowing deformations and bending of the turbine rotor due to thermal gradients inside the turbine. Non-uniform temperature fields inside the turbine arise upon shutdown, since the lower portions of the turbine cool faster than the upper portions. To prevent bowing of the turbine rotor, the latter is maintained in a slow turning condition. This phase of the turbine operation is usually referred as "barring".

The system 1 therefore further comprises a slow turning motor 19, also referred to as "barring motor" or "barring device". The barring motor 19 is usually an electric motor, which can be selectively connected to and disconnected from the rotor of the steam turbine 5 when requested. During barring of the steam turbine 5 the whole shaft line, i.e. the train comprising the steam turbine rotor, the gearbox 11, the crankshaft 7, the flywheel and the reciprocatingly moving components driven by the crankshaft 7, such as the crossheads and reciprocating pistons of the one or more compressor cylinders 3A-3D. The barring motor 19 must therefore have a rated power sufficient to overcome the high inertia of the train and the high breakaway torque. The rated power of the barring motor 19 is therefore much higher than the power which would be required to turn just the rotor of the steam turbine.

Moreover, the barring speed is insufficient to develop a lubrication oil film in the hydrodynamic bearings, and therefore during slow turning of the turbine the bearings operate in a boundary lubrication condition involving high wear rate.

Furthermore, in case of sudden failure of the reciprocating compressor 3, there is a risk of damage of the steam turbine shaft and seals, if the barring device 19 is not able to run, e.g. in case of locking of the crankshaft 7.

During startup the rotary speed of the turbine is gradually increased to the rated speed. During acceleration, the frequency of rotation becomes equal to the natural torsional frequencies of the system. This can provoke resonance phenomena, which can damage components of the system, including the gearbox.

During turbine startup, time is required to remove thermal gradients within the turbomachinery. During this transient phase, the turbine cannot generate sufficient power to drive the reciprocating compressor under load. On the other hand, the reciprocating compressor cannot run under no-load conditions for a long period of time.

A further prior art reciprocating compressor system is disclosed in document US 2008/0081733 A1.

### SUMMARY OF THE INVENTION

Embodiments disclosed herein alleviate or overcome one or more of the abovementioned problems of prior art reciprocating compressor systems driven by a turbine.

According to one exemplary embodiment, a reciprocating compressor system is provided, comprising a turbine and at least one reciprocating compressor driven by the turbine. In some embodiment the turbine is a steam turbine. A gearbox can be provided in the system and is arranged between the turbine and the reciprocating compressor. A clutch is provided, between the turbine and the reciprocating compressor, for mechanically disconnecting the turbine from the reciprocating compressor during a transient phase of operation of the system, for example during a barring phase or during a turbine warm-up phase. A barring device is further provided for slow-turning the turbine during a barring phase.

The system can comprise a reciprocating compressor section comprising at least one reciprocating compressor with one or more compressor cylinders and a common crankshaft driving the pistons of the compressor cylinders. The crankshaft is usually supported by hydrodynamic bearings.

The clutch can be disengaged for example upon shutdown of the turbine. The reciprocating compressor remains then stationary while the turbine is slow-turned at a barring rotary speed, to prevent bowing of the turbine rotor during cooling. The barring speed can be set at a very low value, since failures of the reciprocating compressor bearings due to insufficient rotary speed of the hydrodynamic bearings will not occur, as the reciprocating compressor is inoperative. The barring device can thus be designed to provide limited power, thus reducing the costs and dimension of the barring device.

In some exemplary embodiments the clutch can be arranged and controlled for performing a transient phase comprising warm-up of the turbine. The turbine can then be rotated steadily and continuously at one or more warm-up speeds, which can be equal or near to one or more critical speeds of the shaft line. The turbine being disengaged from the remaining shaft line, resonance phenomena of the system are prevented. Thus, the turbine can be maintained at a rotary speed near to or coinciding with one or more torsional natural frequencies of the train, i.e. the system comprised of the various components driven by the turbine.

The clutch can be arranged between the output shaft (low speed coupling) of the gearbox and the crankshaft of the reciprocating compressor. In currently preferred embodiments, however, the clutch is arranged between the turbine and the input shaft (high speed coupling) of gearbox. When the clutch is disengaged, the gearbox as well as the reciprocating compressor can be maintained stationary, while the turbine is operated in a transient condition, e.g. during barring or warm-up.

In some embodiments the clutch is externally operated, e.g. by a suitable actuator. In other exemplary embodiments the clutch is a self-synchronizing clutch.

The barring device can be comprised of an actuator, such as for example an electric motor or a hydraulic device. A barring gear or gear box can be provided between the actuator and the turbine rotor. A clutch can be provided for separating the barring device from the turbine rotor when the turbine is operating.

In some embodiments, the system can be a dual-drive system. In such case, during a slow-turning transient phase or during a warm-up phase of the turbine, the reciprocating compressor can be driven at an operative speed, which is different (e.g. higher) than the speed that would be provided by the slow-turning turbine, e.g. by means of a secondary mover, for instance an electric motor or a reversible electric machine. A reversible electric machine is a machine capable of being operated in a motor mode or in a generator mode. When a reversible electric machine is used, it can be driven by the turbine and operate in the generator mode when the turbine is in operative, steady-state conditions. If mechanical power is generated by the turbine in excess with respect to the power needed to drive the reciprocating compressor(s), the excess mechanical power can be converted into electric power and used to power facilities combined with the reciprocating compressor system and/or transferred to an electric distribution grid.

The electric machine can be arranged on a side-shaft engageable to or disengageable from the main shaft line. In other embodiments, the electric machine can be arranged on a side-shaft permanently engaged with the main shaft line, e.g. through a gearbox. In yet further embodiments, the electric machine comprises a through shaft with a first end and a second end, permanently engaged to the main shaft line connecting the turbine and the reciprocating compressor. For instance, the electric machine can be arranged between the gearbox and the crankshaft of the reciprocating compressor.

According to a further embodiment, a method of operating a turbine-driven reciprocating compressor system is provided. The method comprises a step of mechanically disengaging the turbine from at least one reciprocating compressor and operating the system in at least one transient condition, with the turbine rotating at a speed different from the steady-state rotary speed or rotary speed range. In some exemplary embodiments the method comprises rotating the turbine by means of a barring device at a barring speed below an operative speed range after shutdown of said turbine, and/or in a direction opposite to the normal rotation direction of the turbine.

In further embodiments, the method comprises the step of mechanically disengaging the turbine from a gearbox arranged between the turbine and the reciprocating compressor when the system is performing a transient phase, such as a barring phase.

In yet further embodiments, the method can comprise the steps of:
arranging a clutch between the turbine and the gearbox;
driving the reciprocating compressor with the turbine via said clutch and said gearbox, at an operative speed;
shutting down the turbine and disengaging the clutch, rotating the turbine after shutdown by means of a barring device at a barring speed below an operative speed (i.e. a rated steady-state speed or speed range), and/or in a direction opposite to the normal direction of rotation of the turbine, maintaining the reciprocating compressor and the gearbox stationary.

In other embodiments, at shutdown of the turbine, the reciprocating compressor can be maintained in operative conditions by driving the reciprocating compressor with a second mover.

According to further exemplary embodiments, a method is provided, comprising the steps of:
starting the turbine while the turbine is disengaged from the gearbox and the reciprocating compressor;
increasing the speed of the turbine above at least one critical rotary speed of the shaft line;
engaging the turbine to the gearbox and the reciprocating compressor, starting operation of the reciprocating compressor.

According to yet further embodiments, a method is provided, comprising the steps of:
starting the reciprocating compressor by means of a secondary mover at a rated speed;
starting the turbine while the turbine is disengaged from the gearbox and the reciprocating compressor;
warming up the turbine rotating the turbine at a speed lower than a minimum rated speed;
increasing the speed of the turbine;
engaging the turbine to the gearbox and the reciprocating compressor;
deactivating the secondary mover.

Features and embodiments are disclosed here below and are further set forth in the appended claims, which form an integral part of the present description. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention. It is important, therefore, that the claims be regarded as including such equivalent constructions insofar as they do not depart from the spirit and scope of the present invention.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 illustrates a reciprocating compressor arrangement driven by a steam turbine according to the related art;
Fig.2 illustrates an arrangement including a reciprocating compressor system driven by a steam turbine according to an embodiment of the present disclosure;
Fig. 3 illustrates a further embodiment of the present disclosure;
Figs. 4 to 7 illustrate transient phases of the reciprocating compressor and steam turbine system according to some embodiments of the disclosure.

### DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

The following exemplary embodiments of the subject matter disclosed herein include a steam turbine. At least some of the advantages of the disclosure can be achieved also with a system using a different turbine, e.g. a gas turbine.

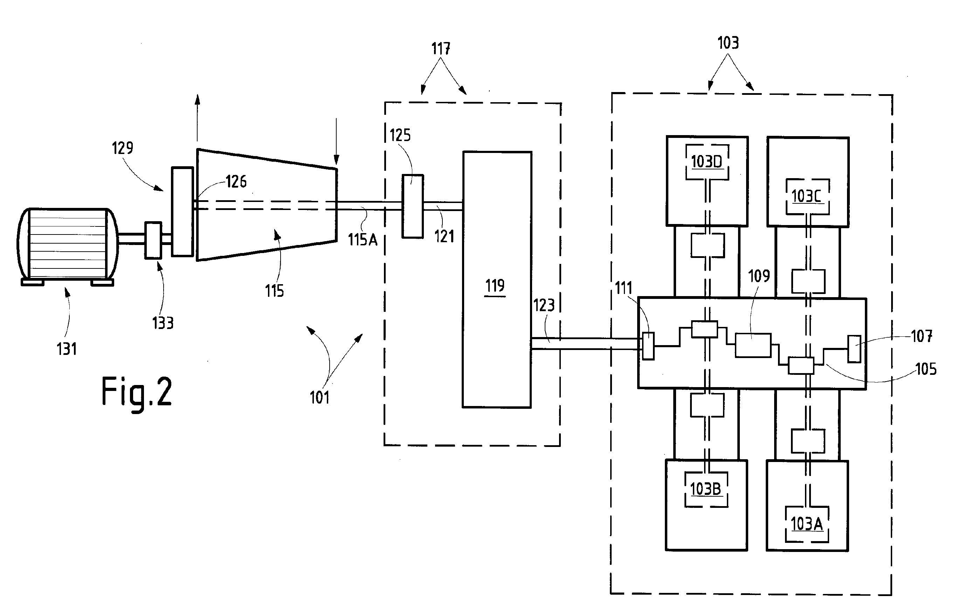

Referring now to Fig. 2, in one exemplary embodiment a system 101 is provided, comprising a reciprocating compressor 103. The reciprocating compressor 103 can comprise a reciprocating compressor arrangement including one or more compressor cylinders and relevant pistons, driven by a common prime mover, as will be disclosed here below. In the exemplary embodiment of Fig. 2 the reciprocating compressor 103 comprises four compressor cylinders labeled 103A, 103B, 103C, 103D. A different number of reciprocating compressors or a different number of compressor cylinders can be provided. A crankshaft 105 drives the compressor pistons arranged in the compressor cylinders 103A-103D of the reciprocating compressor 103. The crankshaft 105 can be supported by bearings 107, 109, 111 schematically illustrated in Fig. 2. The bearings 107, 109 and 111 can be hydrodynamic bearings, wherein a lubrication-oil hydrodynamic film develops when the crankshaft 105 rotates at a sufficiently high rotational speed.

The system 101 further comprises a turbine 115, e.g. a steam turbine. The steam turbine 115 is the prime mover, which turns the crankshaft 105 and drives the reciprocating movement of the pistons and of the cross-heads (not shown) of the compressor cylinders 103A-103D in the reciprocating compressor 103.

The steam turbine 115 is connected to the crankshaft 105 through a mechanical link labeled 117 as a whole. In some exemplary embodiments the mechanical link or connection 117 comprises a gearbox 119, with an input shaft, or high speed coupling 121, and an output shaft, or low speed coupling 123. The gearbox 119 can be an epicyclical gearbox, to reduce the rotary speed of the steam turbine 115 to the relatively low rotary speed of the crankshaft 105. Between the output shaft 123 of the gearbox 119 and the crankshaft 105 one or more joints, clutches, couplings, flywheels or the like, not shown, can be provided.

Between the steam turbine 115 and the input shaft 121 of the gearbox 119 a clutch 125 is arranged. The clutch 125 can be a self-synchronizing clutch. In other embodiments the clutch 125 can be externally operated, for example by means of a suitable actuator, not shown.

A self-synchronizing clutch is configured so that the clutch is automatically engaged once the input shaft thereof achieves a given speed value. Conversely, the clutch automatically disengages when the speed of the input shaft drops below a given speed value or is reversed. Self-synchronizing clutches are known to those skilled in the art and require no detailed description. With a self-synchronizing clutch 125 the steam turbine output shaft 115A will be coupled to the input shaft 121 of the gearbox 119 only when the steam turbine has reached a certain rotary speed. Below that speed, and in case of reversal rotation of the steam turbine rotor, the clutch 125 disengages the output shaft 115A of the turbine 115 from the input shaft 121 of the gearbox 119.

In Fig. 2 reference number 126 schematically indicates the rotor shaft of the steam turbine 115. The rotor shaft 126 can be drivingly connected to a barring gear 129. The barring gear 129 can be selectively connected to and disconnected from a barring device or slow turning device 131. In some embodiments the slow turning device or barring device 131 is comprised of an electric motor. A selectively engageable and disengageable clutch 133 can be provided between the barring device 131 and the barring gear 129. When barring or slow turning of the steam turbine 115 is required, the barring device 131 is energized to put into rotation the rotor of the steam turbine 115 through the barring gear 129.

When the steam turbine 115 is shut down and the turbine rotor is put into slow rotation by the barring device 131, the clutch 125 is advantageously disengaged. The shaft line downstream of the clutch 125 thus remains stationary, while the steam turbine rotor is maintained at a slow-turning barring condition. In some embodiments the direction of rotation during slow-turning can be reversed with respect to the normal operating rotary speed.

The barring device 131 can therefore be designed to developed a torque sufficient to drive into rotation the rotor of the steam turbine 115 only, without having to drive into rotation the remaining part of the shaft line. Since both the gearbox 119 as well as the reciprocating compressor 103 are disengaged from the output shaft 115A of the steam turbine 115, no hydrodynamic support is required from the bearings of the gearbox 119 and of the crankshaft 105. Lubrication of the remaining components of the reciprocating compressor is also not required. Slow turning of the steam turbine 115 will not damage the bearings and mechanical components of the system arranged downstream of the clutch 125.

The clutch 125 interposed between the steam turbine 115 and the gearbox 119 also allows the steam turbine 115 to be rotate during barring in a direction opposite the operative rotary speed of the system, if desired.

Sudden failure of the reciprocating compressor 103, for example involving locking of the crankshaft 105, does not damage the steam turbine shaft and seals, since the steam turbine rotor can be put into barring conditions by disengaging the clutch 125, and activating the barring device 131.

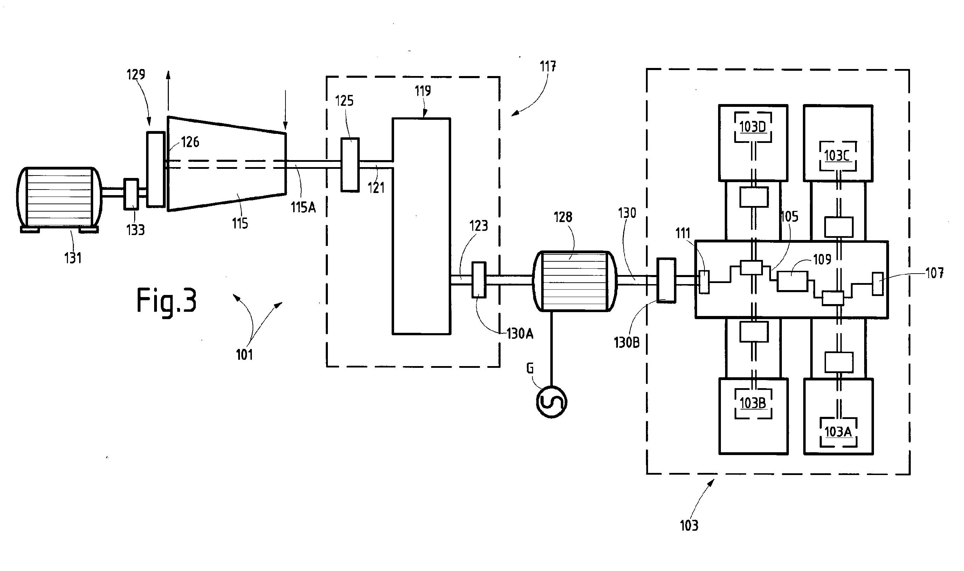

Fig.3 schematically illustrates another exemplary embodiment of the present disclosure. The same reference numbers are used to designate the same or similar components as in Fig.2. These components will not be described again.

The embodiment of Fig.3 comprises a dual-drive reciprocating compressor arrangement, wherein the reciprocating compressor 103, including compressor cylinders 103A-103D, can be driven selectively by the prime mover including the steam turbine 115 or by a secondary mover, including an electric machine 128. In some embodiments the electric machine 128 is a reversible electric machine. The reversible electric machine 128 can operate alternatively to convert electric power into mechanical power (motor mode), or to convert mechanical power into electric power (generator mode). The reversible electric machine 128 is electrically connected to an electric distribution grid, schematically shown at G. Electric power conditioning devices and circuits, not shown, can be provided between the electric machine and the grid.

In some embodiments the reversible electric machine 128 has a through shaft 130 with opposing ends connected, e.g. via joints 130A and 130B, to the output shaft 123 of the gearbox 119 and to the crankshaft 105 of the reciprocating compressor 103, respectively.

In this embodiment the reciprocating compressor 103 can be driven alternatively by the reversible electric machine 128 or by the steam turbine 115. When the reversible electric machine 128 is switched to the electric motor mode for driving the reciprocating compressor 103, the clutch 125 can be disengaged and the steam turbine 115 can be maintained inoperative or can be rotated at a slow barring speed or a slow warm-up speed.

For example, in case of failure of the steam turbine cycle, the steam turbine 115 can be shutdown and brought into barring conditions, while the reciprocating compressor 103 continues operating by means of the reversible electric machine 128.

In a warm-up transient phase, the steam turbine can be rotated at a below-rated speed until a required temperature regime has been reached, while the reciprocating compressor 103 is driven by the electric machine.

When the steam turbine 115 is running and drives the reciprocating compressor 103, via clutch 125 and gearbox 119, the reversible electric machine 128 is switched to the generator mode. Excess mechanical power generated by the steam turbine 115 can be converted into electric power by the reversible electric machine 128 and injected into the electric distribution grid G.

The operating conditions of the steam turbine 115 are thus made to some extent independent from the operating conditions of the reciprocating compressor 103. The steam turbine 115 can be run at design conditions maximizing the efficiency of the thermodynamic cycle, irrespective of fluctuations in the operative conditions of the reciprocating compressor 103. Excess mechanical power generated by the steam turbine 115 is converted in useful electric power.

In less advantageous embodiments the electric machine 128 can operate only as an electric motor and will rotate idly when the reciprocating compressor 103 is driven by the steam turbine 115.

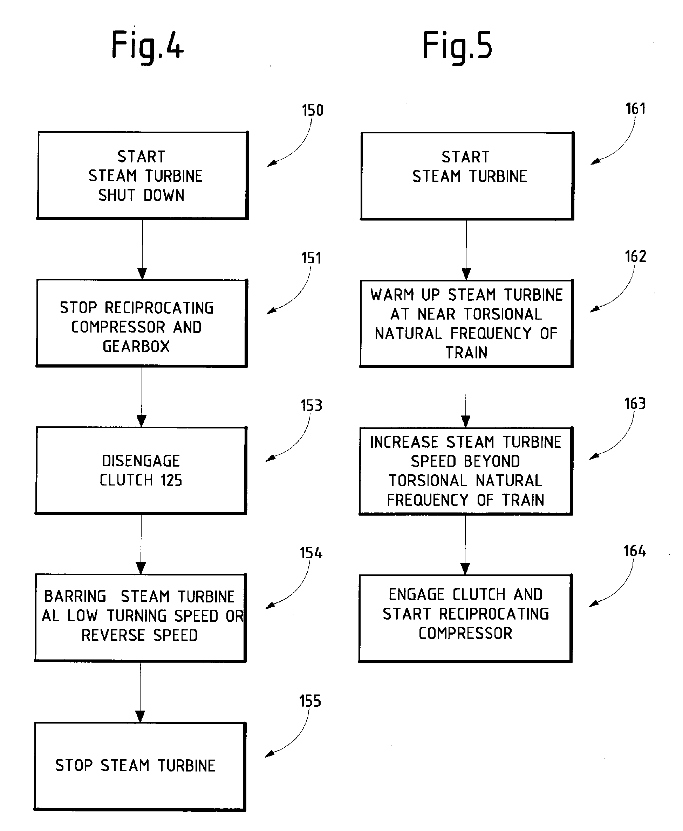

Fig. 4 schematically illustrates a method of operating the system 101 in a transient phase involving steam turbine 115 shutdown. The shutdown process starts at 150. The reciprocating compressor 103 and the gearbox 119 are stopped (step 151) and the clutch 125 is disengaged (step 153), thus mechanically separating the steam turbine 115 from the gearbox 119 and the reciprocating compressor 103.

Once the clutch 125 has been disengaged, slow turning (barring) of the steam turbine 115 by means of barring motor 131 and barring gear 121 can start (step 154) and will continue until the steam turbine 115 has cooled down to a temperature sufficient to avoid bowing or thermal deformation of the steam turbine rotor. Once these conditions are reached, the steam turbine can be stopped (step 155).

Upon start-up or resumption of the steam turbine operation, use of a clutch 125 to engage and disengage the steam turbine 115 with respect to the remaining shaft line provides for additional advantages. Fig. 5 illustrates the method of operating the system 101 during a transient phase involving start-up of the steam turbine 115.

When the steam turbine 115 is started, a warm-up phase is usually required. During warm-up of the steam turbine 115, it might be desirable or required to rotate the steam turbine at a transient rotary speed lower than the rated rotary speed of the system, i.e. the speed of the system in steady-state conditions.

The steam turbine 115 can be driven at a gradually increasing rotary speed from zero up to the rated rotary speed. Speeding up of the steam turbine 115 can be stepwise or continuous. In some embodiments, intermediate transient rotary speeds can be maintained for a certain period of time to allow the steam cycle to smoothly achieve the final steady state operative conditions.

The shaft line or train formed by steam turbine 115, gearbox 119, reciprocating compressor 103 with crankshaft 105, relevant crossheads, pistons, and reversible electric machine (if provided as in Fig.3) is characterized by one or more torsional natural frequencies (critical speeds), which are usually lower than the frequency at the rated rotary speed of the system. This means that during warm-up of the steam turbine 115 the turbine shaft will rotate at a gradually increasing speed moving through the torsional natural frequencies of the system.

In known systems, to prevent damages to the train or series of rotary machines, the steam turbine 115 cannot be maintained in rotation at rotary speeds, which are near or equal to the torsional natural frequencies of the whole train. However, using the clutch 125 this limitation is removed. When the clutch 125 is disengaged, the steam turbine 115 can be put into rotation during warm-up at a speed which is close or equal to the torsional natural frequency of the train, since the shaft line downstream clutch 125 remains stationary or is rotated independently of the steam turbine by a secondary mover. Resonance phenomena are avoided. Clutch 125 can be engaged once the steam turbine 115 rotates at a speed above the torsional natural frequencies of the system.

Fig. 5 summarizes the method of operating the system 101 during a transient process from start-up of the steam turbine 115 up to steady-state conditions. At 161 the steam turbine 115 is started. A subsequent warm-up step 162 follows, during which the steam turbine 115 can rotate at nearly the torsional natural frequency of the train. Clutch 125 is disengaged. The gearbox 119, the reversible electric machine 128 (if present) and the reciprocating compressor 103 are at standstill.

At step 163 the steam turbine speed is increased beyond the torsional natural frequencies of the train and finally, at step 164, the clutch 125 is engaged and the reciprocating compressor 103 starts operating.

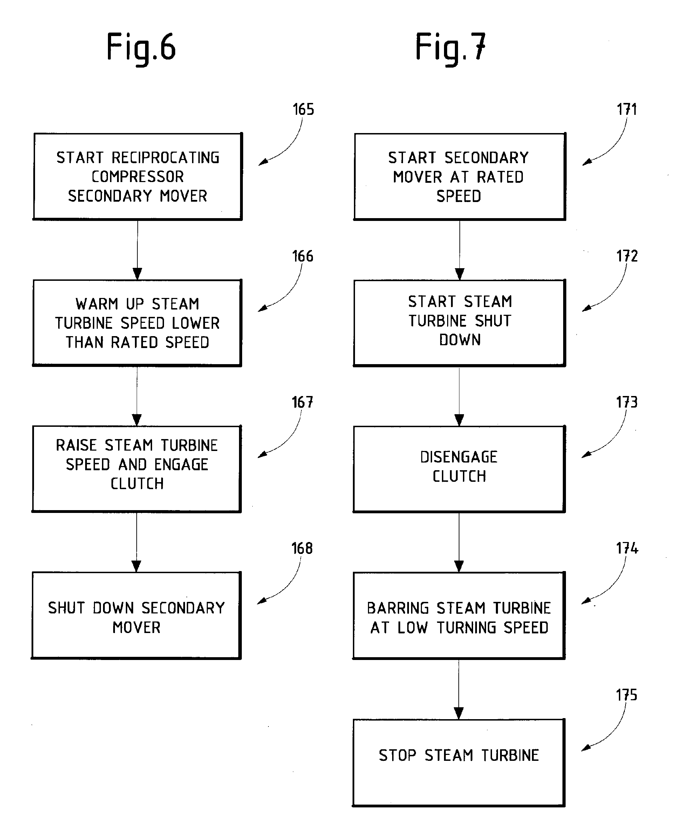

Fig.6 illustrates a method of turbine startup according to a further embodiment of the present disclosure, using a dual-drive system according to Fig.3, for instance. The first step of the startup process (step 165) comprises starting the electric machine 128 in the motor mode and driving the reciprocating compressor 103. While the clutch 125 is maintained in a disengaged condition, the steam turbine 115 can initiate a warm-up phase. The warm-up phase can start before, during or after start-up of the electric machine 128 and of the reciprocating compressor 103. In the flowchart of Fig.6 an exemplary embodiment is shown where warm-up starts (step 166) after start-up of the secondary mover. This, however, is not mandatory.

The rotary speed of the steam turbine can then gradually increase (step 167) until a rated speed is achieved, upon which the clutch 125 can be engaged. The electric machine (secondary mover) 128 can be shut down or switched to the generator mode (step 168).

The reciprocating compressor 103 can thus be started and gradually accelerated to the rated speed avoiding running the reciprocating compressor 103 under no-load conditions for too long, a situation which could result in mechanical failures. The steam turbine 115 can run in a transient warm-up condition and the speed thereof can be increased following an optimal speed sequence, without influencing the operation of the reciprocating compressor 103. Only once the rated rotary speed of the steam turbine 115 has been reached, the steam turbine takes up the task of driving the reciprocating compressor 103.

Fig. 7 illustrates a flowchart showing an embodiment of a further method of operating the system 101 during a transient phase. More specifically, Fig.7 illustrates a steam turbine shut-down procedure in a dual-drive system, for instance as shown in Fig.3. The shut-down method of Fig.7 is aimed at shutting down the steam turbine 115 maintaining the reciprocating compressor 113 in operation. When shut-down of the steam turbine 115 is required, the secondary mover comprising the electric machine 128 is started and rotated at a rated speed (step 171). Shut-down of the steam turbine 115 is then started (step 172) and the clutch 125 is disengaged (step 173). A slow-turning or barring step of the steam turbine 115 follows (step 174), until the steam turbine 115 finally stops (step 175). During steps 174 and 175 the reciprocating compressor 103 continues operating, being driven by the secondary mover 128.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims. Hence, the proper scope of the disclosed innovations should be determined only by the broadest interpretation of the appended claims so as to encompass all such modifications, changes, and omissions. In addition, the order or sequence of any process or method steps may be varied or re-sequenced according to alternative embodiments.

Various aspects and embodiments of the present invention are defined by the following numbered clauses which do not represent the patent claims:
1. A reciprocating compressor system comprising: a turbine; a reciprocating compressor driven by said turbine; a gearbox arranged between said turbine and said reciprocating compressor; a barring device arranged for slow-turning said turbine during a barring phase; wherein a clutch is arranged between the gearbox and the turbine, for mechanically disconnecting said turbine from said reciprocating compressor during a transient phase of operation of said system.
2. The system of clause 1, wherein said transient phase comprises a barring phase after shut down of said turbine.
3. The system of clause 1 or 2, wherein said transient phase comprises a warm-up phase of said turbine.
4. The system of any one of clauses 1 to 3, wherein said clutch is a self-synchronizing clutch.
5. The system of any one of the preceding clauses, wherein said barring device is arranged for driving said turbine in a direction opposite an operative rotation direction of said turbine when driving said reciprocating compressor.
6. The system of any one of the preceding clauses, wherein said barring device comprises a barring actuator and preferably a gearbox.
7. The system of any one of the preceding clauses, comprising a secondary mover, configured and arranged for driving said reciprocating compressor when said clutch is disengaged.
8. The system of clause 7, wherein said secondary mover comprises an electric machine.
9. The system of clause 8, wherein said electric machine is a reversible electric machine.
10. The system of clause 8 or 9, wherein said electric machine comprises a through shaft with a first end and a second end, permanently engaged to a shaft line connectable to said turbine and to said reciprocating compressor.
11. The system of clause 10, wherein said electric machine is arranged between said gearbox and said reciprocating compressor.
12. The system of any one of clauses 1 to 11, wherein said turbine is a steam turbine.
13. A method of operating a turbine driven reciprocating compressor system comprising a reciprocating compressor, a turbine driving said reciprocating compressor, a gearbox between said reciprocating compressor and said turbine, a clutch arranged between said turbine and said gearbox, for selectively engaging and disengaging said turbine to and from said reciprocating compressor and said gearbox, and a barring device; said method comprising the step of mechanically disengaging said turbine from said reciprocating compressor and said gearbox and rotating said turbine at a rotary speed, different from a rated rotary speed, during at least one transient phase.
14. The method of clause 13, wherein said transient phase is a slow-turning phase of said turbine at shut-down, and wherein during said transient phase said turbine is rotated at a barring speed by means of said barring device, said barring speed being different from a rated speed range.
15. The method of clause 13 or 14, comprising the steps of:
   driving said reciprocating compressor with said turbine via said clutch and said gearbox, at a rated speed;
   shutting down said turbine and disengaging said clutch, rotating said turbine after shut-down by means of said barring device at said barring speed below said rated speed, maintaining said reciprocating compressor and said gearbox stationary.
16. The method of any one of clauses 13 to 15, comprising the steps of:
   starting said turbine while said turbine is disengaged from said gearbox and said reciprocating compressor;
   increasing the speed of said turbine above at least one critical rotary speed;
   engaging said turbine to said gearbox and said reciprocating compressor, starting operation of said reciprocating compressor.
17. The method of any one of clauses 13 to 16, comprising the steps of:
   providing a secondary mover, arranged and configured for selectively driving said reciprocating compressor;
   selectively driving said reciprocating compressor with said secondary mover maintaining said clutch disengaged, or with said turbine maintaining said clutch engaged.
18. The method of clause 17, wherein said secondary mover comprises an electric machine.
19. The method of clause 17 or 18, wherein said secondary mover is a reversible electric machine, and wherein, when said reciprocating compressor is driven by said turbine, said reversible electric machine is driven into rotation by said turbine and is switched in a generator mode, said electric machine converting excess mechanical power generated by said turbine into electric power.
20. The method of clause 17, 18 or 19, comprising the steps of:
   starting said secondary mover;
   driving said reciprocating compressor by means of said secondary mover;
   starting said turbine;
   warming-up said turbine at a speed lower than a rated speed;
   raising the turbine speed at said rated speed;
   engaging said clutch, starting driving said reciprocating compressor by means of said turbine;
   shutting down said secondary mover of switching said secondary mover to a generator mode.
21. The method of clause 17, 18, 19 or 20, comprising the steps of:
   while said reciprocating compressor is driven by said turbine, starting said secondary mover;
   starting shut-down of said turbine;
   disengaging said clutch, driving said reciprocating compressor by means of said secondary mover;
   rotating said turbine at a barring speed, while said reciprocating compressor is driven by said secondary mover;
   stopping said turbine.
22. The method of any one of clauses 13 to 21, wherein said turbine is a steam turbine.

## Claims

1. A reciprocating compressor system comprising: a turbine (115); a reciprocating compressor (103) driven by said turbine; a gearbox (119) arranged between said turbine and said reciprocating compressor; a barring device (131) arranged for slow-turning said turbine during a barring phase; **characterised in that** a clutch (125) is arranged between the gearbox and the turbine, for mechanically disconnecting said turbine from said reciprocating compressor during a transient phase of operation of said system.

2. The system of claim 1, wherein said transient phase comprises a barring phase after shut down of said turbine (115).

3. The system of claim 1 or 2, wherein said transient phase comprises a warm-up phase of said turbine (115).

4. The system of any one of claims 1 to 3, wherein said clutch (125) is a self-synchronizing clutch.

5. The system of any one of the preceding claims, wherein said barring device (131) is arranged for driving said turbine (115) in a direction opposite an operative rotation direction of said turbine when driving said reciprocating compressor (103).

6. The system of any one of the preceding claims, wherein said barring device (131) comprises a barring actuator and preferably a gearbox.

7. The system of any one of the preceding claims, comprising a secondary mover (128), configured and arranged for driving said reciprocating compressor (103) when said clutch is disengaged.

8. The system of claim 7, wherein said secondary mover (128) comprises an electric machine.

9. The system of claim 8, wherein said electric machine (128) is a reversible electric machine.

10. The system of claim 8 or 9, wherein said electric machine (128) comprises a through shaft (130) with a first end and a second end, permanently engaged to a shaft line connectable to said turbine (115) and to said reciprocating compressor (103).

11. The system of claim 10, wherein said electric machine (128) is arranged between said gearbox (119) and said reciprocating compressor (103).

12. The system of any one of claims 1 to 11, wherein said turbine (115) is a steam turbine.

13. A method of operating a turbine driven reciprocating compressor system comprising a reciprocating compressor (103), a turbine (115) driving said reciprocating compressor, a gearbox (119) between said reciprocating compressor and said turbine, a clutch (125) arranged between said turbine and said gearbox, for selectively engaging and disengaging said turbine to and from said reciprocating compressor and said gearbox, and a barring device (131), said method comprising the step of mechanically disengaging said turbine from said reciprocating compressor and said gearbox and rotating said turbine at a rotary speed, different from a rated rotary speed, during at least one transient phase.

14. The method of claim 13, wherein said transient phase is a slow-turning phase of said turbine (115) at shut-down, and wherein during said transient phase said turbine is rotated at a barring speed by means of said barring device (131), said barring speed being different from a rated speed range.

15. The method of claim 13 or 14, comprising the steps of:
driving said reciprocating compressor (103) with said turbine via said clutch (125) and said gearbox (119), at a rated speed;
shutting down said turbine and disengaging said clutch, rotating said turbine after shut-down by means of said barring device at said barring speed below said rated speed, maintaining said reciprocating compressor and said gearbox stationary.

## Patentansprüche

1. Reziprokierendes Verdichtersystem, Folgendes aufweisend: eine Turbine (115); einen reziprokierenden Verdichter (103), angetrieben durch die Turbine; ein Getriebe (119), angeordnet zwischen der Turbine und dem reziprokierenden Verdichter; eine Sperreinrichtung (131), eingerichtet zum langsamen Drehen der Turbine während einer Sperrphase; **dadurch gekennzeichnet, dass** eine Kupplung (125) zwischen dem Getriebe und der Turbine angeordnet ist, um die Turbine während einer transienten Betriebsphase mechanisch vom reziprokierenden Verdichter zu trennen.

2. System nach Anspruch 1, wobei die transiente Phase eine Sperrphase nach dem Abschalten der Turbine (115) aufweist.

3. System nach Anspruch 1 oder 2, wobei die transiente Phase eine Aufwärmphase der Turbine (115) aufweist.

4. System nach einem der Ansprüche 1 bis 3, wobei die Kupplung (125) eine selbstsynchronisierende Kupplung ist.

5. System nach einem der vorstehenden Ansprüche, wobei die Sperreinrichtung (131) angeordnet ist, um die Turbine (115) in einer Richtung anzutreiben, die einer Drehrichtung beim Betrieb der Turbine entgegengesetzt ist, wenn der reziprokierende Verdichter (103) angetrieben wird.

6. System nach einem der vorstehenden Ansprüche, wobei die Sperreinrichtung (131) einen Sperraktor und vorzugsweise ein Getriebe aufweist.

7. System nach einem der vorstehenden Ansprüche, aufweisend einen Sekundärantrieb (128), konfiguriert und angeordnet zum Antreiben des reziprokierenden Verdichters (103), wenn die Kupplung ausgerückt ist.

8. System nach Anspruch 7, wobei der Sekundärantrieb (128) eine elektrische Maschine aufweist.

9. System nach Anspruch 8, wobei die elektrische Maschine (128) eine umkehrbare elektrische Maschine ist.

10. System nach Anspruch 8 oder 9, wobei die elektrische Maschine (128) eine durchgehende Welle (130) mit einem ersten Ende und einem zweiten Ende aufweist, die in permanentem Eingriff mit einer Wellenlinie ist, die mit der Turbine (115) und dem reziprokierenden Verdichter (103) verbindbar ist.

11. System nach Anspruch 10, wobei die elektrische Maschine (128) zwischen dem Getriebe (119) und dem reziprokierenden Verdichter (103) angeordnet ist.

12. System nach einem der Ansprüche 1 bis 11, wobei die Turbine (115) eine Dampfturbine ist.

13. Verfahren zum Betreiben eines turbinengetriebenen reziprokierenden Verdichtersystems, aufweisend einen reziprokierenden Verdichter (103); eine Turbine (115), die den reziprokierenden Verdichter antreibt; ein Getriebe (119) zwischen dem reziprokierenden Verdichter und der Turbine; eine Kupplung (125), angeordnet zwischen der Turbine und dem Getriebe, zum selektiven Einrücken oder Ausrücken der Turbine in den / das bzw. aus dem reziprokierenden Verdichter und Getriebe; sowie eine Sperreinrichtung (131); wobei das Verfahren den Schritt des mechanischen Ausrückens der Turbine aus dem reziprokierenden Verdichter und dem Getriebe sowie des Rotierens der Turbine mit einer Drehzahl aufweist, die während mindestens einer transienten Phase von einer Nenndrehzahl abweicht.

14. Verfahren nach Anspruch 13, wobei die transiente Phase eine langsam drehende Phase der Turbine (115) beim Abschalten ist und wobei während der transienten Phase die Turbine mittels der Sperreinrichtung (131) mit einer Sperrdrehzahl rotiert wird, wobei die Sperrdrehzahl von einem Nenndrehzahlbereich abweicht.

15. Verfahren nach Anspruch 13 oder 14, dass die folgenden Schritte aufweist:
Antreiben des reziprokierenden Verdichters (103) mit der Turbine über die Kupplung (125) und das Getriebe (119) bei Nenndrehzahl;
Abschalten der Turbine und Ausrücken der Kupplung, Rotieren der Turbine nach dem Abschalten mittels der Sperreinrichtung bei der Sperrdrehzahl unterhalb der Nenndrehzahl, wobei der reziprokierende Verdichter und das Getriebe stationär gehalten werden.

## Revendications

1. Système de compresseur à mouvement alternatif comprenant une turbine (115) ; un compresseur à mouvement alternatif (103) entraîné par ladite turbine ; une boîte de vitesses (119) aménagée entre ladite turbine et ledit compresseur à mouvement alternatif ; un dispositif de blocage (131) aménagé pour faire tourner lentement ladite turbine au cours d'une phase de blocage ; **caractérisé en ce qu'**un embrayage (125) est aménagé entre la boîte de vitesses et la turbine pour déconnecter mécaniquement ladite turbine dudit compresseur à mouvement alternatif au cours d'une phase de fonctionnement transitoire dudit système.

2. Système selon la revendication 1, dans lequel ladite phase transitoire comprend une phase de blocage après un arrêt de ladite turbine (115).

3. Système selon la revendication 1 ou la revendication 2, dans lequel ladite phase transitoire comprend une phase de préchauffage de ladite turbine (115).

4. Système selon l'une quelconque des revendications 1 à 3, dans lequel ledit embrayage (125) est un embrayage à auto-synchronisation.

5. Système selon l'une quelconque des revendications précédentes, dans lequel ledit dispositif de blocage (131) est aménagé pour entraîner ladite turbine (115) dans un sens opposé au sens de rotation opérationnel de ladite turbine lors de l'entraînement dudit compresseur à mouvement alternatif (103).

6. Système selon l'une quelconque des revendications précédentes, dans lequel ledit dispositif de blocage (131) comprend un actionneur de blocage et, de préférence, une boîte de vitesses.

7. Système selon l'une quelconque des revendications précédentes, comprenant un rouage secondaire (128) configuré et aménagé pour entraîner ledit compresseur à mouvement alternatif (103) lorsque ledit embrayage est dégagé.

8. Système selon la revendication 7, dans lequel ledit rouage secondaire (128) comprend une machine électrique.

9. Système selon la revendication 8, dans lequel ladite machine électrique (128) est une machine électrique réversible.

10. Système selon la revendication 8 ou la revendication 9, dans lequel ladite machine électrique (128) comprend un arbre traversant (130) avec une première extrémité et une seconde extrémité, engagé en permanence sur une ligne d'arbre qui peut être raccordée à ladite turbine (115) et audit compresseur à mouvement alternatif (103).

11. Système selon la revendication 10, dans lequel ladite machine électrique (128) est aménagée entre ladite boîte de vitesses (119) et ledit compresseur à mouvement alternatif (103).

12. Système selon l'une quelconque des revendications 1 à 11, dans lequel ladite turbine (115) est une turbine à vapeur.

13. Procédé de fonctionnement d'un système de compresseur à mouvement alternatif entraîné par une turbine, comprenant un compresseur à mouvement alternatif (103), une turbine (115) entraînant ledit compresseur à mouvement alternatif, une boîte de vitesses (119) entre ledit compresseur à mouvement alternatif et ladite turbine, un embrayage (125) aménagé entre ladite turbine et ladite boîte de vitesses pour, sélectivement, s'engager sur ladite turbine dudit compresseur à mouvement alternatif et ladite boîte de vitesses et s'en dégager, et un dispositif de blocage (131), ledit procédé comprenant l'étape de dégagement mécanique de ladite turbine dudit compresseur à mouvement alternatif et de ladite boîte de vitesses ainsi que de rotation de ladite turbine à une vitesse de rotation différente d'une vitesse de rotation nominale au cours d'au moins une phase transitoire.

14. Procédé selon la revendication 13, dans lequel ladite phase transitoire est une phase de rotation lente de ladite turbine (115) à l'arrêt et dans lequel, au cours de ladite phase transitoire, ladite turbine est entraînée en rotation à une vitesse de blocage au moyen dudit dispositif de blocage (131), ladite vitesse de blocage étant différente d'une plage de vitesse nominale.

15. Procédé selon la revendication 13 ou la revendication 14, comprenant les étapes consistant à :
entraîner ledit compresseur à mouvement alternatif (103) avec ladite turbine via ledit embrayage (125) et ladite boîte de vitesses (119) à vitesse nominale ;
arrêter ladite turbine et dégager ledit embrayage, faire tourner ladite turbine après un arrêt au moyen dudit dispositif de blocage à ladite vitesse de blocage en dessous de ladite vitesse nominale et maintenir immobiles ledit compresseur à mouvement alternatif et ladite boîte de vitesses.
